# EUROPEAN PATENT APPLICATION

(11) **EP 4 614 383 A1**
(43) Date of publication of application: **10.09.2025**
(21) Application number: 24162183.8
(22) Date of filing: 07.03.2024
(51) Int. Cl.: G06F 30/28, G06F 111/10, G06F 119/08

(54) **METHOD AND SYSTEM FOR OPTIMIZATION OF UNIT CELL TOPOLOGY OF A THERMAL ENERGY TRANSFER CHANNEL AS A PHYSICAL OBJECT**

(71) Applicant: VITO NV, 2400 Mol (BE); Buckinx, Geert, 3000 Leuven (BE); Danmarks Tekniske Universitet, 2800 Kongens Lyngby (DK)
(72) Inventor: BUCKINX, Geert, 3000 Leuven (BE); SCHOUSBOE ANDREASEN, Casper, 2800 Kongens Lingby (DK)
(74) Representative: V.O.

(57) **Abstract**

A computer-implemented method and computer-system for optimizing the design of a physical thermal energy transfer channel. The process involves defining a unit cell based on target design criteria, and then using these unit cells to form the channel. The optimization is performed at the unit cell level, focusing on improving thermal performance through iterative material redistribution within the cell. The optimized design parameters for the unit cell is output and used to manufacture the optimized thermal energy transfer channel with a specified arrangement of these unit cells as a physical object, based thereon.

## Description

### FIELD OF THE INVENTION

The invention relates to a computer-implemented method for optimization of the topology of a thermal energy transfer channel as a physical object. The invention also relates to a system configured to perform optimization of the topology of a thermal energy transfer channel as a physical object. Furthermore, the invention relates to a heat transfer element produced using a computer-implemented method. Additionally, the invention relates to a thermal energy channel produced using a computer-implemented method. The invention further relates to the use of a heat transfer element design obtained using a computer-implemented method for manufacturing a thermal energy channel.

### BACKGROUND TO THE INVENTION

For thermal management systems, efficient heat transfer is important. The efficient transfer of thermal energy is a critical aspect in numerous fields, including electronics cooling, automotive, aerospace, and energy systems. The performance and longevity of many devices and systems are heavily reliant on their ability to manage heat effectively.

In state of the art, the design and optimization of thermal energy transfer channels, such as cooling channels and heat exchangers, are often challenged by the complexity of their structures and the demanding requirements of their applications. Traditional methods for designing these channels generally involve complex and resource-intensive computational processes, where the entire topology of the channel is subject to optimization. This approach, while thorough, can be exceedingly time-consuming and computationally expensive, making it impractical for many applications, especially where rapid development and iteration are necessary.

Another limitation of existing approaches is the difficulty in modeling and optimizing fluid flow and heat transfer within these channels. Accurately predicting and controlling the behavior of thermal fluids through complex geometries is a non-trivial task, particularly when dealing with varying temperature fields and flow conditions. This complexity often results in designs that are either overly conservative or fail to meet performance expectations under real-world conditions.

Furthermore, achieving an optimal balance between thermal performance and manufacturability remains a substantial hurdle. Manufacturing constraints further complicate the design and production of optimized thermal energy transfer channels. Traditional manufacturing methods may not be well-suited to produce intricate or non-standard geometries that are often required for optimized thermal performance. The limitations in feature resolution, material handling, and structural integrity pose significant barriers to the realization of highly optimized designs.

Lastly, the integration of these thermal management systems into larger assemblies or devices also presents challenges. The need to accommodate specific operating conditions, such as maximum pumping power or pressure drop requirements, often necessitates compromises in design that can detract from overall thermal efficiency.

In summary, the current state of the art in the design and optimization of thermal energy transfer channels faces significant challenges in terms of computational efficiency, material integration, fluid flow and heat transfer modeling, manufacturability, and integration into larger systems. There is a strong desire for an improved approach to the design and optimization of thermal energy transfer channels, which can address these limitations and meet the demanding requirements of thermal transfer applications.

### SUMMARY OF THE INVENTION

It is an object of the invention to provide for a method and a system that obviates at least one of the above mentioned drawbacks.

Additionally or alternatively, it is an object of the invention to improve optimization of the topology of thermal energy transfer channels as physical objects.

Additionally or alternatively, it is an object of the invention to provide for a method and system for designing thermal energy transfer channels with reduced computational resources required.

Additionally or alternatively, it is an object of the invention to enhance the overall performance and effectiveness of thermal energy transfer systems through improved design and optimization techniques.

Thereto, the invention provides for a computer-implemented method for optimization of the topology of a thermal energy transfer channel as a physical object, including the steps of: obtaining target design criteria of the physical object; defining, based on the target design criteria of the physical object, a unit cell which is dimensioned such that the thermal energy transfer channel is formed by N1 × N2 identical unit cells; performing, by means of a processing unit, a topology optimization of the thermal energy transfer channel at a unit cell level, wherein the design of a single unit cell is optimized based on a set of criteria including at least thermal performance, wherein the topology optimization includes iterative local redistribution of material of the single unit cell, and wherein the topology optimization of the single unit cell is performed until a stop criterion is met, the stop criterion being defined as achieving a predetermined threshold of thermal performance or reaching a maximum number of optimization iterations; outputting optimized design parameters representing material distribution in each unit cell of the thermal energy transfer channel; and transferring data based on the outputted optimized design parameters to a production equipment to produce an optimized physical objection representing the thermal energy transfer channel with N1 × N2 identical unit cells.

By defining a unit cell and incorporating a repetitive pattern, optimization can be achieved effectively in a more modular fashion. For example, in the case of a heatsink or heat exchanger, the unit cells can be methodically arranged in a matrix. In this way, the optimized structures formed within the unit cells that are arranged next to each other in said matrix, can also adhere to a recurring pattern. In an advantageous way, the optimization process concentrates on individual unit cells rather than the entire thermal energy transfer channel, e.g. cooling channel of heatsink or heat exchange channel of a heat exchanger.

While existing techniques may theoretically enable the optimization of an entire thermal energy transfer channel, from inlet to outlet, this approach generates exceedingly complex material distributions and geometries. Furthermore, such algorithms may be hindered by current limitations in computing power. The advantageous method according to the disclosure focuses towards optimizing a singular unit cell. The optimized unit cell is then repetitively arranged within a thermal energy transfer channel of a thermal energy transfer device (e.g. of a heat sink, heat exchanger, etc.).

Advantageously, the computer-implemented method can improve the efficiency by focusing on the topology optimization of a thermal energy transfer channel at smaller scale, namely at a unit cell level. Computational load can be significantly reduced, and the design process can be expedited. By optimizing the design of a single unit cell based on criteria like thermal performance and iteratively redistributing material within it, the method ensures high precision in achieving targeted thermal efficiency. This method leads to the creation of an optimized thermal energy transfer channel, composed of multiple, identical unit cells, tailored precisely to the desired specifications, whilst the optimization is performed only for one single unit cell instead of the complete thermal energy transfer channel.

The optimization is not performed on the entire channel as a whole but at a much smaller scale - at the level of a unit cell. A unit cell is the smallest repeatable entity in the structure of the thermal channel, and optimizing at this micro-scale level can provide for a reduction in computational load, a high precision in targeted thermal efficiency and an expedited design process.

Optimizing the topology at the unit cell level instead of the entire channel dramatically reduces the computational load. Traditional methods that attempt to optimize the entire structure require vast computational resources and time due to the complexity and size of the data involved. By focusing on a single unit cell, the method simplifies the problem to a more manageable scale. Once the unit cell is optimized, it can be replicated to form the entire channel, thereby bypassing the need to compute the whole structure directly.

Since the optimization is confined to a small, manageable unit, the turnaround time from design to prototype can be significantly reduced. This is especially beneficial in industries where time-to-market and rapid prototyping are important.

The optimization process involves iteratively redistributing material within the unit cell to enhance its thermal performance. This iterative process allows for fine-tuning of the material distribution, ensuring that the final design is highly optimized for thermal performance. The method can ensure that each unit cell is precisely tailored to achieve the desired thermal performance criteria.

An optimized thermal energy transfer channel can be obtained and/or manufactured, comprising multiple, identical unit cells. Each of these unit cells is an optimized version, ensuring that the entire channel, when assembled, exhibits optimal thermal performance.

A more efficient design process can be achieved, enabling quicker development of thermal energy transfer channels that meet specific performance criteria. Furthermore, this can be achieved while requiring significantly less computational power and resources compared to traditional methods. This efficiency is not just in terms of energy and time but also in terms of resource utilization, making it an environmentally and economically favorable approach.

Optionally, a spatially periodic material distribution is obtained along at least a main flow direction of the thermal energy transfer channel. Furthermore, also a spatially periodic material distribution can be obtained in a transversal direction of the thermal energy transfer channel.

The establishment of a spatially periodic material distribution in these directions significantly enhances the uniformity of thermal energy transfer within the channel. This uniformity can be important for maintaining consistent thermal management across the entire length and breadth of the channel, providing consistent performance under varying operational conditions.

The alignment can allow for direct and efficient transfer of thermal energy, reducing hotspots and uneven temperature distribution.

In some examples, additionally or alternatively, the method may be applied to optimize other performance aspects like fluid dynamics efficiency, pressure drop, etc.

The computer-implemented method can significantly improve the ability to manufacture optimized thermal transfer channels.

Optionally, periodic flow equations are utilized to model fluid flow at each unit cell, the periodic flow equations ensuring similarity in fluid flow around each unit cell of the thermal energy transfer channel, and wherein periodic heat transfer equations are utilized to model heat transfer at each unit cell, the periodic heat transfer equations including both linearly varying and periodically varying components of the temperature field within the thermal energy transfer channel.

In some examples, the models used for modelling the flow are adapted to take into account the periodicity of the flow for the unit cells. The Navier-Stokes equations can be adapted or substituted with periodic flow parts/equations. The periodicity of the flow equations imposes that the flow pattern within and around each unit cell periodically changes. A uniform flow pattern is obtained. This uniformity acts as a constraint that the flow within each unit cell remains nearly identical. This is in contrast to complete computational fluid dynamics of the flow of the entire channel, where variables like mass flow rate at the inlet and pressure at the outlet necessitate a different modelling approach, using different set of equations. The employed modelling of the flow for the unit cell enables to more efficiently model the thermal energy transfer channel with repetitive unit structures formed within the unit cells.

Also the thermal transfer model used for modelling the thermal energy transfer can be adapted to take into account the periodicity. Since the thermal transfer fluid flows through successive unit cells, its temperature incrementally changes, a phenomenon captured by the heat equations. The thermal transfer modelling captures a dual nature: the presence of a temperature gradient, and a constant temperature component within each unit cell. The thermal transfer modelling may capture at least two aspects of the temperature field: the presence of a temperature gradient, and a periodic temperature component within each unit cell. The change may be an increase or decrease, depending on whether the heat transfer channel is configured to act as a cooling channel or heating channel.

The periodic flow equations to model fluid flow ensure uniformity/similarity in fluid dynamics across all unit cells. Fluid flow dynamics are complex and can vary significantly within a thermal system. By using periodic flow equations, the method takes into account the spatially periodic material distribution and can ensure that fluid flow is uniformly modeled across all unit cells. This uniformity is essential for the consistency of fluid dynamics throughout the thermal energy transfer channel. Periodic flow equations help in predicting how the fluid will behave as it moves through each replicated unit cell, ensuring that the entire system operates harmoniously.

The periodic heat transfer equations, with their linear and periodically varying components, provide a comprehensive understanding of the temperature field within the channel. The temperature within a thermal energy transfer channel may be not uniform, it can vary in more complex patterns that need to be accurately predicted and managed. The periodic nature of these equations means that they can model repeating patterns in temperature changes.

Optionally, the periodic heat equations account for incremental temperature change in a thermal transfer fluid as it passes through successive unit cells in the thermal energy transfer channel.

This incremental approach to temperature change modeling allows for a more detailed and accurate representation of the thermal dynamics within the channel, leading to enhanced optimization of the unit cells for thermal performance. An improved precision in the thermal management of the system can be achieved by accounting for temperature variations across each unit cell.

As the fluid travels through successive unit cells in the channel, its temperature may not remain constant. It may change gradually. Traditional models might oversimplify this process, treating the temperature change as uniform across the entire channel. However, this results in sub-optimal designs since the temperature change can be a gradual and incremental process. By modeling these incremental changes, the method can more accurately reflect the real thermal dynamics within the channel.

Each unit cell can be optimized based on how the thermal transfer fluid's temperature changes specifically in that part of the channel. This can ensure that each segment of the channel contributes optimally to the overall heat transfer process in the design.

The design process can thus take into account not just the thermal behavior of the unit cell in isolation but also how it interacts with adjacent cells in terms of heat transfer (cf. how the temperature changes based on relative position of the unit cell in the channel). This holistic view leads to a more efficient thermal energy transfer channel, as each unit cell is fine-tuned to handle the specific thermal load it will encounter.

By accounting for temperature variations across each unit cell, the method can ensure that the thermal energy transfer channel operates optimally under a wide range of conditions.

In some examples, additionally or alternatively, the periodic heat equations may involve varying the increment of temperature change to model different fluid properties or heat transfer efficiencies. Additionally or alternatively, the periodic heat equations may account for phase changes in the fluid and/or to model non-linear temperature changes.

In some examples, the method may prove more effective for laminar flow conditions. Laminar flow conditions may not require specific solutions for addressing boundary layer phenomena.

Optionally, the unit cells are allowed to include various material types including solid material, fluid, and porous material.

In some examples, a third element can be employed, namely a porous material. This addition can simplify calculations and can enhance the flexibility of adding or removing material during the optimization process, offering a more dynamic and efficient solution.

Model equations can be employed as a foundational framework, defining the rules and relationships within the model. Parametrization can be employed involving selecting which parameters of the model to optimize. Traditionally, models may limit themselves to fluid and solid materials, but in some advantageous examples an intermediate state - porous material is used. This inclusion not only broadens the scope of our optimization but also transitions the problem from a binary (e.g. 0 - fluid and 1 - solid) to a continuous one, thereby enabling the use of more efficient optimization algorithms.

The thermal properties of the structures within the unit cells can be customized by selecting appropriate materials, thus enhancing the adaptability.

Unlike conventional methods that may limit the material choice to a single type, such as solid material, in some examples, this is expanded to include fluids and porous materials as well. The flexibility to choose from different materials (solid, fluid, and porous) allows for a more customized approach to designing each unit cell.

Optionally, a relaxation model is employed to handle different material states including solid, fluid, and porous material, wherein the relaxation model is configured to allow for continuous variation in material properties.

The relaxation model can be employed to manage the different states of materials (solid, fluid, and porous) within the unit cells. This model allows for continuous variation in material properties, facilitating a more refined and nuanced approach to material distribution within the unit cell.

A relaxation model can be employed to manage different material states, including solid, fluid, and porous material, in the context of optimizing the topology of a thermal energy transfer channel. The relaxation model allows for continuous variation in material properties, which can be important for achieving a high degree of optimization in the design.

Gradient-based optimization can be more effective since there are a high number of parameters involved. Gradient optimization necessitates a mathematical derivative of the objective. To calculate the gradient, adjoint-based optimization, a method specifically suited for this purpose, can be used.

The transition between different material states within the unit cell is facilitated. This flexibility is important in optimizing the thermal performance of the energy transfer channel. Furthermore, the relaxation model's ability to enable continuous variation in material properties contributes to a more accurate and effective optimization process. In traditional methods, abrupt changes in material properties can lead to suboptimal designs that do not fully exploit the potential of the materials involved. The relaxation model overcomes this limitation by allowing for gradual transitions, thereby optimizing the distribution of materials for thermal performance.

Optionally, a filter operator is used on the material distribution within the unit cell in order to control the size of smallest solid features in the optimized thermal energy transfer channel topology, wherein the filter operator is adjusted to achieve a desired level of detail in solid feature representation within the thermal energy transfer channel.

A filter operator may be introduced to control the size of the smallest solid features in the optimized unit cell topology. This operator is adjustable to achieve the desired level of detail in the solid feature representation within each unit cell, and thus the channel. The filter operator helps to maintain a balance between detail resolution and manufacturability, enhancing the practicality and efficiency of the design.

Advantageously, this provides ability to mitigate issues related to ill-posedness and numerical instabilities commonly encountered in standard topology optimization procedures. By applying the filter operator, the invention ensures a more robust and reliable optimization process, leading to highly efficient and practical designs. The filter operator may function by eliminating material changes occurring over length scales smaller than a specified radius, thereby ensuring a more uniform and stable material distribution. This strategic control over the material distribution not only refines the optimization process but also aligns with manufacturing constraints related to minimum feature size and resolution.

Moreover, the filter's implementation facilitates a more manageable and controlled optimization environment, significantly reducing computational complexity and time. This advantage is particularly notable when dealing with complex thermal energy transfer systems, where optimization at a granular level is important for achieving optimal thermal performance.

Optionally, the filter operator is designed to enforce manufacturing constraints related to minimum feature size and resolution.

This can ensure that the structure within the unit cells and, consequently, the entire thermal energy transfer channel, are not only optimized for thermal performance but are also manufacturable with existing technologies. The technical effect is a more realistic and feasible design, achieved by aligning the optimization process with practical manufacturing capabilities, thus bridging the gap between theoretical design and practical application.

When designing (thermal transfer) structures within the unit cells for thermal energy transfer channels, it is essential to consider the limitations of current manufacturing technologies. These constraints typically involve the minimum size and resolution of features that can be reliably produced.

A focus on minimum feature size and resolution is particularly important in the context of advanced manufacturing methods like additive manufacturing (3D printing), which are often used to produce complex thermal energy transfer channels. These methods have specific limitations in terms of the smallest feature size they can accurately produce and the resolution of details. The filter operator, by considering these limitations, ensures that the design of the unit cells is compatible with the capabilities of these manufacturing methods.

In some examples, the structures within the unit cells, and by extension, the entire thermal energy transfer channel, are optimized not only for thermal performance but also for manufacturability. An optimized design that cannot be manufactured or is too costly to produce is of limited utility. Therefore, by incorporating manufacturability into the optimization process the applicability and usefulness of the optimized designs can be enhanced.

In some examples, additionally or alternatively, the filter operator may be designed to dynamically adjust constraints based on real-time feedback from manufacturing equipment. Additionally or alternatively, the filter operator may be designed to implement artificial intelligence or machine learning driven optimization to continuously refine the manufacturing constraints.

Optionally, a projection operator is applied to a filtered material distribution to achieve a binary material distribution of solid and fluid material, wherein the projection operator is utilized to facilitate the manufacturing process by simplifying the material distribution to discrete states.

A reduction of complexity in the material layout can be obtained, which eases the transition from design to manufacturing, for example in additive manufacturing contexts. The projection operator achieves this by converting a nuanced material distribution into a more manageable binary format.

Complex material distributions, while beneficial for optimizing thermal performance, can pose significant challenges in manufacturing, especially when dealing with some manufacturing techniques like additive manufacturing. By reducing the range of material states to a binary format, the projection operator eliminates the need for manufacturing equipment to handle a wide spectrum of material states. This simplification is particularly important in contexts where the manufacturing technology has limitations regarding the precision or types of materials it can process.

Optionally, the production equipment comprises an additive manufacturing system capable of fabricating at least parts of the thermal energy transfer channel with N1 × N2 identical unit cells based on the optimized design parameters.

Additive manufacturing, commonly known as 3D printing, offers unparalleled flexibility in producing complex geometries and structures, which makes it particularly suitable for fabricating the intricate designs of thermal energy transfer channels. In some examples, this flexibility is leveraged, enabling the production of parts with the close specifications derived from the optimization process.

The structures within the unit cells, optimized for thermal performance and optionally manufacturability, often have complex geometries that can be challenging to produce using traditional manufacturing methods. Additive manufacturing, with its layer-by-layer construction approach, may be ideally suited to handle such complexities.

In some examples, the optimization process is integrated with manufacturing techniques, such as additive manufacturing. The transition from design to production can be smooth and efficient. This integration may guarantee that the intricate details and specifications determined during the optimization process can be accurately replicated in the physical product.

Another significant advantage of this integration is the enhanced feasibility and speed of manufacturing. Additive manufacturing systems are known for their rapid prototyping and production capabilities. By employing these systems, the method can quickly turn optimized designs into physical products, significantly reducing the time from conception to deployment.

Optionally, a plurality of unit cells are arranged in a matrix configuration, each unit cell defining therein an individual thermal transfer element within the thermal energy transfer channel, the thermal transfer element being surrounded by thermal fluid.

In this setup, each unit cell may house an individual (structural) thermal transfer element that is surrounded by thermal fluid. This arrangement can ensure uniformity in the thermal transfer across the channel, as each unit cell is designed to perform optimally in transferring thermal energy. Furthermore, the surrounding thermal fluid aids in the efficient distribution and transfer of heat, enhancing the overall thermal management of the system.

An enhanced modularity and scalability to the design of the thermal energy transfer channel can be obtained. The matrix configuration allows for easy scaling of the system - it can be expanded or reduced in size by simply adding or removing unit cells. This modularity is invaluable in adapting the thermal energy transfer channel to different applications and requirements. Whether the channel needs to be scaled up for industrial applications or scaled down for compact electronic devices, the matrix configuration allows for this versatility.

The organization of unit cells in a matrix also enables the thermal energy transfer channel to be adapted to various sizes and shapes. This adaptability can be important in customizing the channel for specific devices or systems, which may have unique spatial constraints or specific thermal management needs. The ability to configure the unit cells to fit different shapes and sizes ensures that the thermal energy transfer channel can be integrated into a wide range of applications.

Overall, the matrix configuration of unit cells can enhance the design flexibility of the thermal energy transfer channel. It allows for a system that is not only efficient in thermal management but also adaptable and scalable to meet a wide range of needs. This flexibility is a significant advancement in the design of thermal management systems, providing solutions that are customizable to various applications while maintaining high efficiency and effectiveness.

Optionally, the thermal energy transfer channel is a cooling channel that is configured to serve as a heat sink, comprising a plurality of cooling elements derived from the topology optimization of the unit cells.

Optionally, the thermal energy transfer channel is a heat exchanger channel, comprising a plurality of heat transfer elements derived from the topology optimization of the unit cells.

Optionally, the topology optimization of the thermal energy transfer channel at a unit cell level employs a gradient-based optimization technique that uses adjoint-based optimization for calculating gradients during the iterative process.

The gradient-based optimization enables to find the optimal design by iteratively adjusting the design parameters in the direction that improves the objective function, which, in this case, can be linked to thermal performance. Gradients, which represent the direction and rate of the change in the objective function, are important in this process. By understanding which way to adjust the design parameters to most efficiently improve performance, the optimization process becomes more targeted and effective.

Adjoint-based optimization is a technique for calculating gradients, particularly useful in complex systems. It is highly efficient in terms of computational resources, especially when the number of design parameters (in this case, topology of structure within unit cell) is large. This efficiency stems from the fact that the adjoint method can compute the gradients of all design parameters with respect to a single objective function in a single calculation, as opposed to other methods that might require separate calculations for each parameter.

The use of these advanced optimization techniques leads to more precise and efficient topology design within the unit cell. The precision comes from the ability of the gradient and adjoint methods to accurately determine the direction and magnitude of changes needed for optimization. Efficiency is achieved through the speed at which these calculations can be performed, even in the context of complex design scenarios with many variables.

A notable technical advantage of this approach is the increased accuracy and speed of the optimization process. In complex optimization scenarios, such as designing a thermal energy transfer channel, the landscape of possible designs can be vast and intricate. Gradient-based optimization, aided by adjoint-based methods for calculating gradients, navigates this landscape more effectively and quickly, identifying the most promising design directions without unnecessary computations.

In some alternative examples, other optimization techniques may be used, such as artificial intelligence or machine learning-based methods, which may offer different advantages in terms of i.a. convergence speed.

Optionally, the set of criteria for optimization includes constraints based on operating conditions, namely at least one of a maximum pumping power or a maximum pressure drop requirement.

The inclusion of operational constraints such as maximum pumping power or pressure drop requirements ensures that the optimized design is not only theoretically efficient but also practically applicable and compatible with real-world cooling systems.

For instance, maximum pumping power is a critical factor in systems where energy efficiency is important, and pressure drop must be minimized to ensure that the system does not impose excessive strain on pumps or other components. By including these constraints in the optimization process, the design becomes more aligned with the practical realities of system operation.

Optionally, the topology optimization process employs laminar flow conditions.

The topology optimization may provide structural characteristics that are more compatible with laminar flow conditions. However, alternative methods may be used to model turbulent flows.

Laminar flow refers to a flow regime characterized by smooth, parallel layers of fluid, in contrast to turbulent flow, which is characterized by chaotic, irregular fluid motion. In laminar flow, the motion of the fluid particles occurs in an orderly manner, with minimal mixing and disturbance between the layers. By optimizing the thermal energy transfer channel under laminar flow conditions, the method caters specifically to scenarios where such flow characteristics are desirable or required.

Laminar flow, being more stable and predictable, may be preferred in some examples. The uniformity/similarity of temperature profiles typically associated with laminar flow may provide for a more accurate modelling at the unit cell level.

Optionally, dimensions of each unit cell are determined based on the desired thermal performance and physical constraints of the thermal energy transfer channel.

The dimensions of the unit cell can be optimized for specific applications, thereby maximizing thermal efficiency within the given physical constraints, ensuring that the design is both effective and practical.

The unit cell design can be customized to meet specific application needs, ensuring both practicality and efficiency. For example, the unit cells can be customized to specific thermal requirements and spatial constraints of the application in which the thermal energy transfer channel will be used.

Optionally, the unit cells are box-shaped, with specific dimensions in height, width, and length. For example, for a heat source that needs cooling, a surface area may be defined. The length of the unit cells may be determined heuristically. For instance, in some exemplary heatsink applications, the size may be between 50 to 1200 micrometers. However, various other dimensions can be used. In some examples, the size is between 300 to 800 micrometers, preferably 400 to 700 micrometers, more preferably 500 to 600 micrometers. At least in some examples, these range are chosen to balance the desired performance with computational costs, which can escalate with larger unit sizes.

According to an aspect, the invention provides for a system configured to perform optimization of the topology of a thermal energy transfer channel as a physical object, the system comprising: a data module configured to store target design criteria of the physical object; a unit cell defining module operatively connected to the data module, configured to define a unit cell based on the target design criteria of the physical object, wherein the unit cell is dimensioned such that the thermal energy transfer channel is formed by N1 × N2 identical unit cells; a processing unit operatively connected to the unit cell defining module, configured to perform topology optimization of the thermal energy transfer channel at a single unit cell level, wherein the design of the single unit cell is optimized based on a set of criteria including at least heat transfer efficiency, and wherein the topology optimization includes iterative local redistribution of material of the single unit cell, the optimization being performed until a stop criterion is met, the stop criterion being defined as achieving a predetermined threshold of heat transfer efficiency or reaching a maximum number of optimization iterations; an output module operatively connected to the processing unit, configured to output optimized design parameters representing material distribution in each unit cell of the thermal energy transfer channel; and a transfer interface operatively connected to the output module, configured to transfer the optimized design parameters to production equipment for producing an optimized physical object representing the thermal energy transfer channel with N1 × N2 identical unit cells.

Advantageously, a more efficient and computationally less intensive process for designing thermal energy transfer channels is obtained, achieved by leveraging the optimization of a single unit cell that is then replicated throughout the channel.

The system can be used for obtaining topology optimized individual thermal energy transfer structures in a thermal energy transfer channel of a thermal energy transfer device. For example, the system can be used for obtaining topology optimized fins in a cooling channel of a heat sink. In another example, the system can be used for obtaining topology optimized tubes in a heat transfer channel of a heat exchanger. In such examples, a full simulation of an entire channel, from the inlet to the outlet, for optimization purposes, can be very inefficient. It may demand extensive computing power and/or lack repetitive or periodic design elements, often resulting in suboptimal configurations.

Advantageously, the topology optimization process can be made significantly more efficient by only requiring calculations for one individual unit cell. The optimized structures within the unit cell can then be used to come with a design of a complete thermal transfer channel with multiple such structures systematically arranged in a matrix. This approach facilitates a highly efficient design and manufacturing process.

The system can significantly improve the manufacturing of optimized thermal transfer channels.

According to an aspect, the invention provides for a method for optimizing the topology of a thermal energy channel as a physical object, the method including: acquiring design objectives for the physical object; establishing, based on these objectives, a unit cell dimensioned to form the thermal energy channel through a repetitive array of these cells; executing, via a computational processor, a topology optimization for the thermal energy channel at the level of a single unit cell. This can include optimizing the unit cell design focusing primarily on thermal efficiency criteria for example. The optimization process may involve iterative local adjustments in the material composition of the unit cell, and can continue until a predefined thermal efficiency threshold is reached or a maximum iteration limit is met. The method further includes generating optimized design specifications that detail the material layout within each unit cell of the thermal energy channel; and conveying data based on these optimized design specifications to manufacturing equipment for creating an optimized physical object embodying the thermal energy channel structured with the array of identical unit cells.

According to an aspect, the invention provides for a method for optimizing the structure of a component in a device, including: collecting design goals for the device; determining, in accordance with these goals, a modular element whose dimensions allow the component to be constructed from a grid/matrix of these elements; implementing, using a computing processor, a structural optimization process for the component at the level of the individual modular element. This may include refining the design of one modular element with an emphasis on a key performance criterion. The method may include iterative adjustments in the material configuration of the modular element and may be conducted until a specific performance target is achieved or a set number of iterations is completed. The method further includes producing optimized structural parameters that describe the material composition in each modular element of the component; and transmitting information based on these optimized parameters to fabrication systems for the production of an optimized device comprising the component formed from the repetitive arrangement of the modular elements.

According to an aspect, the invention provides for a heat transfer element produced using the design obtained by the computer-implemented method according to the disclosure.

According to an aspect, the invention provides for a heat transfer element produced using a computer-implemented method, the method comprising: obtaining target design criteria specifically for the heat transfer element; defining, based on the target design criteria for the heat transfer element, a unit cell which is dimensioned such that the heat transfer element is formed by a specified arrangement of N1 × N2 identical unit cells; performing a topology optimization of the heat transfer element at a unit cell level, wherein the design of a single unit cell is optimized with a focus on achieving enhanced thermal performance for the heat transfer element, the optimization including iterative local redistribution of material within the single unit cell; outputting optimized design parameters which represent material distribution in each unit cell specifically tailored for the heat transfer element; and transferring data based on these outputted optimized design parameters to production equipment, which is then used to produce a physical heat transfer element representing the optimized structure with N1 × N2 identical unit cells.

According to an aspect, the invention provides for a thermal energy channel produced using the design obtained by the computer-implemented method according to the disclosure.

According to an aspect, the invention provides for a thermal energy transfer channel comprising multiple heat transfer elements arranged in a specific pattern, wherein the design of each heat transfer element is derived from the optimized design of a structure within a unit cell, as obtained through a computer-implemented method for topology optimization, wherein the topology optimization including obtaining target design criteria of a physical object, defining a unit cell based on these criteria, and performing a topology optimization at the unit cell level with a processing unit, the topology optimization involving iterative local redistribution of material in the unit cell, optimized based on criteria including thermal performance, and continuing until a stop criterion of a predetermined thermal performance threshold or a maximum number of optimization iterations is met, wherein the pattern of the heat transfer elements corresponds to the material distribution in each optimized unit cell of the thermal energy transfer channel, as defined by the outputted optimized design parameters from the topology optimization process, and wherein the thermal energy transfer channel is composed of N1 × N2 identical unit cells, each containing one or more of these heat transfer elements.

According to an aspect, the invention provides for a thermal energy transfer channel, obtained through a computer-implemented method, the thermal transfer channel having a plurality of identical structures in a plurality of unit cells arranged in an N1 × N2 matrix, where structures within each unit cell are optimized based on target design criteria specific to the channel's thermal performance, the structures within the channel's unit cells being configured through iterative local redistribution of material within each unit cell, guided by a processing unit until a stop criterion, defined by a predetermined thermal performance threshold or a maximum number of optimization iterations, is met, wherein the optimized design parameters of each unit cell contribute to the overall enhanced thermal efficiency of the channel.

According to an aspect, the invention provides for a use of a heat transfer element design obtained using the computer-implemented method according to the disclosure for manufacturing a thermal energy channel.

According to an aspect, the invention provides for a thermal energy transfer channel with multiple heat transfer elements arranged in a pattern, the design of the heat transfer elements obtained based on the design of the structure optimized within an optimized unit cell using the computer-implemented method according to the disclosure.

According to an aspect, the invention provides for a computer-implemented method comprising creating a database of optimized unit cells according to the above optimization process, and employing a selection model that is configured to select the most suitable unit cell in the database for a given/target scenario.

In some examples, a database of optimized unit cells is created, wherein a selection model is employed that is configured to select the most suitable unit cell in the database for a given scenario.

According to an aspect, the invention provides for a computer-implemented method for selecting and utilizing optimized unit cells in the design of a thermal energy transfer channel, the method comprising: creating and maintaining a database of optimized unit cells, each unit cell in the database having been previously optimized in accordance with the method of the disclosure, wherein each unit cell is characterized based on its design parameters and performance metrics; employing a model within a processing unit, the model being configured to select the most suitable unit cell from the database for a given scenario. The suitability can be determined based on a comparison of the scenario-specific requirements with the characteristics of the unit cells in the database. The scenario-specific requirements are for example thermal performance, thermal transfer efficiency, material constraints, operational conditions, etc. The selected unit cell can be used as a basis for the design or modification of a thermal energy transfer channel in new or existing physical objects. Advantageously, the thermal performance can be tailored to the specific requirements of the given scenario.

It will be appreciated that throughout this disclosure, the term "thermal energy transfer channel" may also be interchangeably referred to as a "heat transfer channel." This nomenclature reflects the fundamental understanding that heat transfer inherently involves the flow or transfer of thermal energy across the boundaries of a specified system or channel. In this context, the heat transfer channel is conceptualized as a medium or pathway through which thermal energy is exchanged between different materials or environments. This exchange can occur through various mechanisms, including but not limited to, conduction, convection, and radiation. The choice of term, whether it be "thermal energy transfer channel" or "heat transfer channel," is intended to encompass all such mechanisms and the diverse applications in which they may be employed. This inclusive definition recognizes the interchangeable use of these terms in the field and aligns with the established principles of thermodynamics and heat transfer technology.

It will be appreciated that any of the aspects, features and options described in view of the method apply equally to the system and the described devices. It will also be clear that any one or more of the above aspects, features and options can be combined.

### BRIEF DESCRIPTION OF THE DRAWING

The invention will further be elucidated on the basis of exemplary embodiments which are represented in a drawing. The exemplary embodiments are given by way of non-limitative illustration. It is noted that the figures are only schematic representations of embodiments of the invention that are given by way of non-limiting example.

In the drawing:
Fig. 1 shows a schematic diagram of a top view of an arrangement of unit cells;
Fig. 2 shows a schematic diagram of a perspective view of an arrangement of unit cells;
Fig. 3 shows a schematic diagram of a perspective view of an arrangement of unit cells with topology optimized structures therein;
Fig. 4 shows a schematic diagram of a method; and
Fig. 5 shows a schematic diagram of a method.

### DETAILED DESCRIPTION

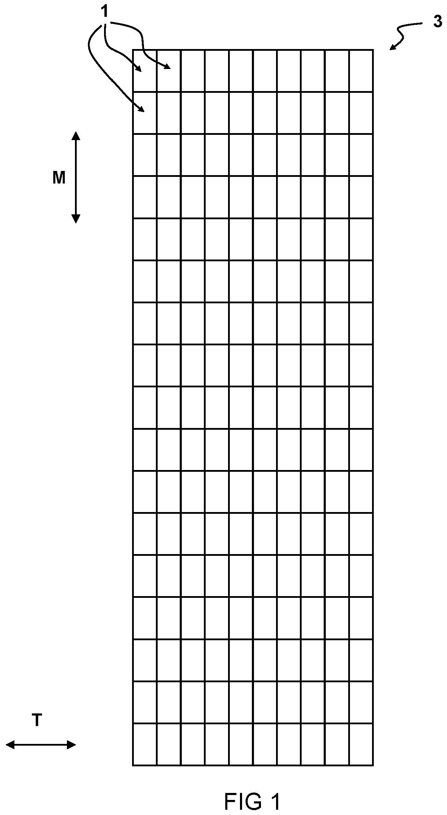

Fig. 1 shows a schematic diagram of a top view of an arrangement of unit cells 1 defined in a computer-implemented method for optimization of the topology of a thermal energy transfer channel as a physical object. In this method, target design criteria of the physical object are obtained. Subsequently, based on the target design criteria of the physical object, a unit cell can be defined which is dimensioned such that the thermal energy transfer channel 3 is formed by N1 × N2 identical unit cells. By means of a processing unit, a topology optimization is performed of the thermal energy transfer channel 3 at a unit cell level. The design of a single unit cell 1 is optimized based on a set of criteria including at least thermal performance. The topology optimization includes iterative local redistribution of material of the single unit cell 1. The topology optimization of the single unit cell is performed until a stop criterion is met, the stop criterion being defined as achieving a predetermined threshold of thermal performance or reaching a maximum number of optimization iterations. Furthermore, optimized design parameters representing material distribution in each unit cell of the thermal energy transfer channel are outputted. Data based on the outputted optimized design parameters can be transmitted to a production equipment to produce an optimized physical objection representing the thermal energy transfer channel with N1 × N2 identical unit cells.

In this example, the unit cells are arranged in a 2 dimensional array. Such a matrix arrangement, can result in a spatially periodic material distribution along at least a main flow direction M and a transversal direction T of the thermal energy transfer channel.

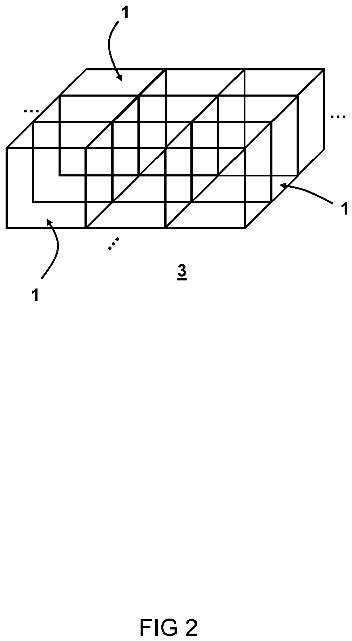

Fig. 2 shows a schematic diagram of a perspective view of an arrangement of unit cells 1. This example illustrates that within a unit cell, a three-dimensional topology optimization may be performed. Only a number of a total number of unit cells are shown. The thermal energy transfer channel 3 may be subdivided in a number of unit cells, and advantageously, the topology optimization may be performed for a single unit cell.

Instead of performing a complete topology optimization, unit cells are defined and used for optimization at smaller scale. The thermal transfer channel can be constructed from a matrix of unit cells. Since there is a repetition pattern, the optimization is performed at the unit cell level instead of a full optimization for an entire channel. This not only significantly reduces the required computing power, but also allows the repetition (pattern) to be enforced while performing the topology optimization. Topology is optimized at the level of a unit cell, which is then repeated repetitively in a channel.

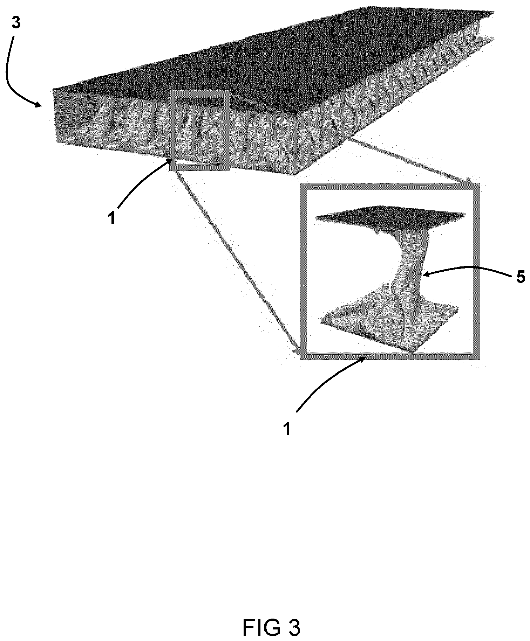

Fig. 3 shows a schematic diagram of a perspective view of an arrangement of unit cells 1 with topology optimized solid structures 5 therein. As can be seen, for each unit cell the same structure is employed, building up the entire thermal energy transfer channel 3.

In this example, the topological design of a cooling channel is given with a rectangular cross-section. This exemplary channel has a constant heat flux on its bottom surface, coming from a heat source, and its other surfaces are thermally insulated. The design objective is to minimize the channel's average bottom temperature for a given steady mass flow rate through the channel while ensuring that the pressure drop across the channel remains below a prescribed value.

The maximum pumping power or pressure drop, also known as an 'operating point', can also be taken into account. This can for example be employed for battery cooling, wherein the efficiency of the cooling is measured per unit area, and is aligned with the existing power of the vehicle's pump.

A goal of this optimization process is to strategically distribute solid material within the cooling channel to enhance the efficiency of heat transfer from the heated surface to the coolant fluid. This optimization is critical in ensuring that the cooling channel performs effectively in maintaining the desired temperature levels while minimizing energy consumption.

The distribution of solid material within the channel directly influences the flow field of the coolant and the temperature distribution within the channel. Optimizing this material distribution is important for achieving specific thermal design objectives. For example, in an exemplary application of enhancing the lifetime of a car battery, the primary goal may be to minimize the average temperature at the bottom of the channel. This approach ensures that the average surface temperature of the heat source, in this case, the battery, is also minimized, thereby improving its performance and longevity. The focus in this specific example is on reducing the temperature to enhance the efficiency and durability of the application. However, other thermal design objectives may also be employed. For example, obtaining a uniform temperature distribution of the heat source can improve the overall efficiency of the heat exchange process.

The presence and arrangement of solid material in the channel can alter the path of the coolant flow, potentially creating more surface area for heat transfer or inducing turbulence that enhances mixing and thermal exchange.

In some examples, in this optimization, the material distribution within the channel is represented using a continuous approximation of the Heaviside function. The Heaviside function is a step function that transitions sharply from one value to another. In this context, the values of the function range between 0 and 1. The value 0 corresponds to regions of solid material, while the value 1 represents regions occupied by the coolant fluid. Intermediate values indicate a transition or mixture zone where the solid material and fluid coexist in varying proportions.

The continuous approximation of the Heaviside function allows for a smooth transition between solid and fluid regions. This is beneficial in numerical modeling and simulation, as it avoids the complexities and instabilities associated with sharp interfaces.

The gradual transition also facilitates the use of gradient-based optimization techniques, as it ensures that small changes in the material distribution lead to small changes in the flow and temperature fields, which can be effectively captured and analyzed.

One of the important challenges in optimizing material distribution is achieving the right balance between solid and fluid regions to maximize heat transfer while maintaining fluid flow efficiency.

The design can consider factors such as pressure drop across the channel, the potential for material erosion due to fluid flow, manufacturing constraints, and the overall durability and reliability of the cooling channel.

Optimized material distribution has significant implications in various fields, particularly in electronics cooling, automotive industry, aerospace, and other areas where efficient thermal management can be important. The ability to customize the material distribution within cooling channels allows for the design of more compact, efficient, and effective cooling systems tailored to specific applications and operating conditions.

In the design of these cooling channels, the structure can be conceptualized as consisting of repetitive segments or 'unit cells'. Each unit cell is identical in terms of material distribution and geometrical configuration.

This periodicity allows for a simplification in the analysis, as the behavior of the entire cooling channel can be inferred by examining a single unit cell. In other words, the entire channel is seen as a repetition of this unit cell, both in structure and function.

The assumption of spatial periodicity in material distribution within each unit cell means that the characteristics of materials (whether solid or fluid) are repeated at regular intervals along the channel.

This periodic arrangement influences how the coolant fluid flows through the channel and how heat is transferred from the solid surfaces to the fluid.

In some examples, the flow of coolant through the channel is considered to be 'steady', meaning it does not change with time. Additionally, in some examples, it is 'periodically developed', implying that the flow characteristics (like velocity and pressure) repeat periodically along the length of the channel. This concept simplifies the mathematical modeling of the flow and heat transfer, as it allows the use of a set of uniform equations to describe these processes throughout the channel.

In order to understand and predict the behavior of the flow and temperature within the channel, the fundamental laws of momentum and energy conservation can be applied to each unit cell. The Navier-Stokes equations can be used to describe the flow velocity and pressure field within the coolant fluid. The energy conservation equation, on the other hand, can be used to determine the temperature distribution within the unit cell. This equation takes into account the heat being transferred from the solid parts of the channel to the coolant fluid.

By applying these conservation laws, a set of governing equations can be derived. These equations describe how the velocity, pressure, and temperature vary within each unit cell. The flow velocity equation accounts for the movement of the coolant fluid through the channel, influenced by the channel's geometry and material distribution. The pressure equation relates to how the fluid pressure varies along the channel, a critical factor in ensuring that the fluid flows effectively through the entire length of the channel. The temperature field equation is important for understanding how heat is being transferred from the heat source through the solid material of the channel and into the fluid, ultimately determining the efficiency of the cooling process.

Topology optimization in this context refers to finding the best material distribution within the cooling channel to achieve the desired thermal performance.

The material distribution is represented by a density field that varies continuously between two extremes, typically 0 (solid material) and 1 (coolant fluid). This density field influences the flow and thermal properties within the channel.

Direct optimization of this material distribution can lead to issues like numerical instabilities and non-physical intermediate densities, which do not represent either solid or fluid clearly.

To address these challenges, the design filtering and projection methods can be employed in an advantageous manner.

For design filtering, a Helmholtz filter can be used in the optimization process in some examples. This filter smooths the material distribution, essentially spreading out the material density over a specified radius. This process helps in controlling the minimum size of the solid features in the design.

By applying the Helmholtz filter, the optimization process avoids creating very small features that are not feasible to manufacture or might lead to computational difficulties.

In some examples, after applying the Helmholtz filter, the resulting smoothed material distribution can be projected to a more discrete (binary) distribution using a projection operator.

The projection operator sharpens the distinction between solid and fluid regions, transforming the smoothed density field into a field that more closely represents a realistic material distribution with distinct solid and fluid regions.

This step can be important for ensuring that the final design is manufacturable and functionally practical, as it eliminates intermediate densities that are not physically interpretable.

These techniques aid in achieving a more binary (0 or 1) distribution of solid and fluid materials in the optimized design.

They can help in reducing numerical instabilities which are common in topology optimization problems, in an advantageous way.

By controlling the size of the smallest solid features, these methods ensure that the resulting design is not only optimal in terms of thermal performance but also feasible to manufacture.

The application of design filtering and projection significantly influences the final topology of the cooling channel. It ensures that the design is robust, manufacturable, and meets the thermal performance requirements.

These methods allow for a more controlled and precise optimization process, leading to efficient and practical designs for cooling channels in heat exchange systems.

In some examples, an augmented Lagrangian method is employed. In order to solve the constrained minimization problem, an Augmented Lagrangian method can be used. This involves formulating a sequence of simpler bound-constrained minimization problems. The solution sequence is designed to converge towards the optimal topology that minimizes the average temperature at the channel's bottom while adhering to the flow and heat transfer constraints.

In some examples, the Augmented Lagrangian method is employed to address a complex optimization problem involving multiple constraints. The method transforms a constrained optimization problem into a series of easier, bound-constrained optimization problems.

In some examples, the primary goal may be to minimize the average temperature at the bottom of the cooling channel. This objective is subject to constraints related to fluid flow (like the pressure drop across the channel) and heat transfer.

The problem can be modeled mathematically with a functional that needs to be minimized, where the functional represents the average bottom temperature.

Constraints, such as the prescribed pressure drop, can be incorporated into the Lagrangian of the optimization problem. The Augmented Lagrangian method enhances the standard Lagrangian by adding penalty terms associated with the constraints.

These penalty terms are designed to penalize any deviation from the constraints, thereby ensuring that the solution adheres to the specified limits.

In some examples, the method involves solving a sequence of optimization problems. Each problem in the sequence is simpler and involves bound constraints, typically easier to handle than the original constraints.

As the sequence progresses, the solutions of these simpler problems are iteratively refined to approach the solution of the original, more complex problem.

The sequence of solved problems can be carefully orchestrated to converge towards an optimal topology. This topology can be characterized by its ability to minimize the average temperature while satisfying the constraints related to pressure drop and heat transfer.

The convergence can be achieved by adjusting the penalty parameters and updating the Lagrange multipliers associated with the constraints in each iteration.

The Augmented Lagrangian method can be implemented numerically. The process involves discretizing the continuous problem, applying numerical solvers, and iteratively refining the solution. Each iteration may involve evaluating the functional, checking the constraints, and updating the variables and parameters based on the results of the evaluation.

In the context of the exemplary cooling channel design, this method allows for the detailed and precise optimization of the channel's internal structure to achieve efficient heat transfer.

The optimized design is expected to result in a cooling channel that operates within the prescribed pressure drop limits while effectively reducing the average temperature at its bottom.

The methodology is adaptable to different channel dimensions and flow conditions. It allows for the consideration of various heat source areas and constraints related to the space available for the cooling channel.

The material distribution within the cooling channel may be assumed to be spatially periodic. This implies that the channel consists of identical unit cells, and the distribution repeats itself at regular intervals along the main flow direction and transversal direction.

The flow through the cooling channel can be described as steady and periodically developed. This means the velocity field, pressure field, and temperature field within a unit cell are representative of the entire channel.

Periodic boundary conditions can be applied to these fields. For instance, the velocity and pressure fields in the channel satisfy the condition *u*(*x*) = *u*(*x* + *lⱼ*) and *p**(*x*) = *p**(*x* + *lⱼ*), where *lⱼ* is the length of the unit cell in the *j^{th}* direction. It will be appreciated that the actual pressure field may be not periodic, but may contain a periodic component p*, next to a global pressure gradient over each unit cell.

The momentum and energy conservation laws may be applied to the unit cell, incorporating periodicity conditions. These include equations for the velocity field *u*, the deviation pressure field *p*_{*}*,* and the temperature field *T.*

A no-slip boundary condition can be employed at channel walls meaning the velocity of the fluid at the solid boundaries (channel walls) is zero.

The bottom wall of the channel, where the heat flux is applied, can have a specific boundary condition relating to the heat transfer. This includes a constant heat flux condition at the bottom wall.

For the fluid-solid interface within the unit cell, continuity of the temperature field and heat flux may be required, ensuring that the thermal conditions are consistently applied across the interface.

The temperature field *T* in the channel may be described as a combination of a linearly varying component and a periodic component due to the constant heat flux at the bottom of each unit cell.

The temperature field T(x) in the cooling channel can be expressed as a sum of two components: a linearly varying part with a constant gradient ∇T_{dev} and a periodic component T*(x) that varies periodically over each unit cell. This is due to the constant heat flux q_{b} at the bottom of each unit cell.

The energy conservation equation, considering negligible viscous dissipation and absence of other heat sources, can be formulated for a single unit cell. It combines the flow velocity field and the temperature field components to relate the convective transport of heat to the conductive transport within the unit cell.

The average temperature gradient ∇T_{dev} can be derived from the constant heat flux q_{b} and the volume-averaged velocity (u) over the unit cell. This relationship can be established through an equation that incorporates these parameters.

The temperature gradient ∇T_{dev} can be directed along the main flow direction and parallel to the average velocity (u). This can ensure that the gradient is correctly oriented in relation to the flow and heat transfer dynamics in the channel.

In some examples, a unique solution for the periodic temperature field may be obtained by imposing its volume-averaged value over the unit cell. In order to achieve a unique solution for the periodic temperature field T*, its volume-averaged value over the unit cell can be imposed. This value, denoted as T₀, can serve as a reference temperature and can be important for the solution's uniqueness but does not necessarily influence the heat transfer coefficient.

This formulation of the temperature field and its relationship with the heat flux and flow velocity can be important for the optimization of the cooling channel. It can ensure that the design variables (material distribution, channel geometry) are optimized in a way that maximizes heat transfer efficiency while adhering to the constraints of the flow and thermal conditions.

It will be appreciated that the above technique may also be used for other thermal transfer channels, such as for example a heat exchanger channel.

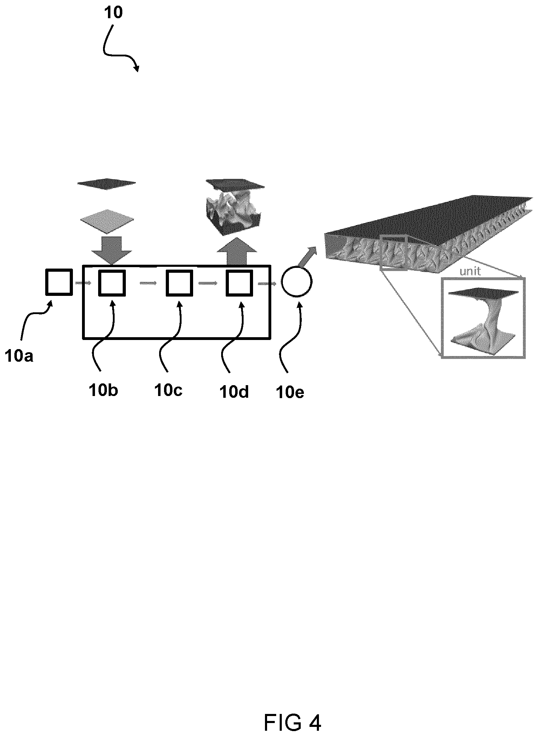

Fig. 4 shows a schematic diagram of a method 10 for obtaining optimized unit-cell topologies for an exemplary cooling channel. However, the method 10 can also be used for obtaining other optimized thermal transfer objects, such as heat exchanger channels. First, target design criteria 10a for the physical object (i.e. cooling channel) are obtained. Then, an initial design 10b of the unit cell is defined. In this example, a reduced CFD model 10c is employed, which outputs the results to an optimizer 10d that is configured to perform topology optimization for the unit cell. This is repeated until an optimized design 10e is obtained. This is optimized design 10e at unit cell level is then used for the complete cooling channel built up from an arrangement of unit cells each having the topology optimized structure therein.

Optimized units may be generated for constructing cooling channels with arrays of periodic fins in which the material distribution (i.e. the topology) of the coolant and the solid (channel walls and fins) is optimized for maximal performance of the cooling channel.

The cooling channels are often called heat sinks or cold plates in industry. The terminology "fins" may refer to all solid material apart from the channel walls which conduct the heat from the heat source to the coolant fluid.

Maximal performance can be understood as achieving the lowest possible temperature at the bottom of the cooling channel which is in contact with the heat source to be cooled for a given maximum allowable pumping power (or pressure drop) for the coolant flow. Nevertheless, the design method can also deal with a variety of other performance criteria and other constraints for instance a minimal channel thickness, a minimal "fin" thickness as well as a given mass flow rate of coolant.

The optimized topology is usually rather complex so manufacturing of the cooling channel may require advanced manufacturing techniques based on additive manufacturing, etching, or hydroforming.

The invention provides for an improved design methodology for manufacturing an improved thermal transfer channel as a physical object. In some examples, the method 10 may require at least some of the following input specifications related to the choice of coolant and the choice of channel material(s) and the available space.
a. The coolant properties: density, dynamic viscosity, Prandtl number, and thermal conductivity.
b. The channel material: thermal conductivity.
c. The overall channel dimensions: the overall width, height, and length of the box in which the coolant channel should fit.

Additionally, in some examples, the following technical specifications may be supplied (optionally):
d. The heat load from the heat source to be cooled (often expressed in Watt/cm²).

The maximum allowable pumping power or pressure drop for the coolant flow.

Optionally also the following information may be supplied for the generated design:
e. The desired mass flow rate of coolant to be used.
f. The material resolution: i.e., the smallest manufacturable size of the fins or solid walls depending on the additive manufacturing process or etching process.

The number of units to be employed along the length or width of the cooling channel (or its periodic "fin" array).

The output of the design method is a complete description of the topology (i.e., distribution of solid material: geometry and shape of the solid walls/fins) of the optimized unit and as such the entire cooling channel.

The optimized topology can be represented in many formats, for instance, a table of discrete material pixels (with the specified resolution in the unit). Various outputs formats, for instance usable for 3D printing or additive manufacturing technologies, can be used.

In some examples, the design methodology starts from an arbitrary initial topology for the unit of the cooling channel. This initial topology of the unit may consist, for instance, of a box confined by six flat surfaces of which four form the bottom, top, and side solid walls of the channel, while the remaining two surfaces serve as the inlet and outlet for the coolant flow.

In general, the topology is represented by a "material indicator function" which takes the value of one at locations in the unit where the material is fluid and zero where the material is solid.

The initial topology (or material indicator function) is gradually optimized in a stepwise approach in order to maximize the performance of the cooling channel. This optimization process is done in an automated way by relying on a specific computational fluid dynamics (CFD) model combined with a matching adjoint-based optimization method. Other techniques may also be used.

In this example, the CFD model can serve to predict the coolant flow and temperature field in the cooling channel for each intermediate topology so that the resulting performance (i.e., the average bottom temperature and pumping power) can be calculated.

To facilitate the optimization process, the CFD model may also deal with intermediate values of the material indicator function (between zero and one), which will be gradually eliminated to obtain a physically meaningful topology in the end.

The adjoint-based optimization method uses the information from the CFD model to modify the intermediate topology such that an incremental increase of performance is obtained at each step. In particular, the adjoint-based optimization method yields the sensitivity (or gradient) of the performance measures with respect to the material distribution in the coolant.

These sensitivities (also called gradient) are subsequently provided to a gradient-based optimization algorithm to obtain a suitable modification or update of the intermediate topology.

The employed CFD model can be configured to predict the flow and temperature field in the cooling channel under the assumption of streamwise periodicity from one unit to another.

The adjoint-based optimization method can be tailored to be compatible with the preceding CFD model. The exemplary gradient-based optimization algorithm may rely on a so-called Augmented Lagrangian approach.

Advantageously, the computer-implemented method allows to optimize the topology of individual cooling units which can be stacked together to form cooling channels (or in other examples heat exchanger channel, etc.). As only a single unit is optimized instead of the entire cooling channel, the design method is computationally very cheap and results in a fast design cycle: the units can be automatically generated relatively quickly without requiring advanced computational hardware. This makes the design method especially suitable for designing cooling channels with a large surface area (i.e., when the device to be cooled has a large area). The current approaches known in the art typically cannot handle such large structures.

Topology design methods for cooling channels in the art may only be suitable for optimizing the entire material distribution of a cooling channels at once which is computationally very expensive. Usually, supercomputer infrastructure with hundreds to thousands of cores is required and weeks of computational time.

It will be appreciated that cooling channels take away the heat from a certain device (a heat source) and transfer it to e.g. a single-phase coolant circulating inside the channel. The device to be cooled or heat source is usually a computer chip or a power electronics device (semiconductor) that generates heat. However, also batteries (e.g., inside electric vehicles), lasers, and medical equipment can be cooled by cooling channels. The coolant which takes up the heat is often liquid water or a mixture of liquid water and glycol. Alternatively, air can be used for some applications.

Existing cooling channels can come in a variety of design geometries. These design geometries may be put into two categories: cold plates and heat sinks. A strict distinction between these two is not always made. A cold plate commonly includes of a flat metallic base plate, attached to the heat source, and contains straight or curved channels with one or more inlets and outlets.

A heat sink commonly consists of a base plate on which solid fins are mounted. These fins can form straight channels in which the coolant flows. Also fin arrays with fins in a periodic configuration are adopted, as they provide additional heat transfer surface. Liquid coolant or air is forced to flow between these fins by means of a pump/fan. For electronics cooling, micro channels can be integrated in the chip itself (e.g. through etching in silicon).

By construction, current cooling channels may include identical units that are repeated in a periodic fashion. Such a unit may correspond to a single fin, or a row of fins mounted on a part of the base plate.

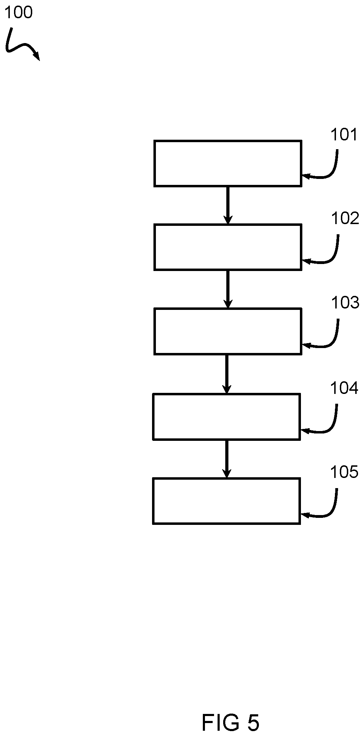

Fig. 5 shows a schematic diagram of a computer-implemented method 100 for optimization of the topology of a thermal energy transfer channel as a physical object. In a first step 101, target design criteria of the physical object are obtained. In a second step 102, based on the target design criteria of the physical object, a unit cell is defined which is dimensioned such that the thermal energy transfer channel is formed by N1 × N2 identical unit cells. In a third step 103, by means of a processing unit, a topology optimization of the thermal energy transfer channel is performed at a unit cell level, wherein the design of a single unit cell is optimized based on a set of criteria including at least thermal performance, wherein the topology optimization includes iterative local redistribution of material of the single unit cell, and wherein the topology optimization of the single unit cell is performed until a stop criterion is met, the stop criterion being defined as achieving a predetermined threshold of thermal performance or reaching a maximum number of optimization iterations. In a fourth step 104, an output of optimized design parameters is provided which represents material distribution in each unit cell of the thermal energy transfer channel. In a fifth step 105, data based on the outputted optimized design parameters is transferred to a production equipment to produce an optimized physical objection representing the thermal energy transfer channel with N1 × N2 identical unit cells.

It will be appreciated that the method may include computer implemented steps. All above mentioned steps can be computer implemented steps. Embodiments may comprise computer apparatus, wherein processes performed in computer apparatus. The invention also extends to computer programs, particularly computer programs on or in a carrier, adapted for putting the invention into practice. The program may be in the form of source or object code or in any other form suitable for use in the implementation of the processes according to the invention. The carrier may be any entity or device capable of carrying the program. For example, the carrier may comprise a storage medium, such as a ROM, for example a semiconductor ROM or hard disk. Further, the carrier may be a transmissible carrier such as an electrical or optical signal which may be conveyed via electrical or optical cable or by radio or other means, e.g. via the internet or cloud.

Some embodiments may be implemented, for example, using a machine or tangible computer-readable medium or article which may store an instruction or a set of instructions that, if executed by a machine, may cause the machine to perform a method and/or operations in accordance with the embodiments.

Various embodiments may be implemented using hardware elements, software elements, or a combination of both. Examples of hardware elements may include processors, microprocessors, circuits, application specific integrated circuits (ASIC), programmable logic devices (PLD), digital signal processors (DSP), field programmable gate array (FPGA), logic gates, registers, semiconductor device, microchips, chip sets, et cetera. Examples of software may include software components, programs, applications, computer programs, application programs, system programs, machine programs, operating system software, mobile apps, middleware, firmware, software modules, routines, subroutines, functions, computer implemented methods, procedures, software interfaces, application program interfaces (API), methods, instruction sets, computing code, computer code, et cetera.

Herein, the invention is described with reference to specific examples of embodiments of the invention. It will, however, be evident that various modifications, variations, alternatives and changes may be made therein, without departing from the essence of the invention. For the purpose of clarity and a concise description, features are described herein as part of the same or separate embodiments, however, alternative embodiments having combinations of all or some of the features described in these separate embodiments are also envisaged and understood to fall within the framework of the invention as outlined by the claims. The specifications, figures and examples are, accordingly, to be regarded in an illustrative sense rather than in a restrictive sense. The invention is intended to embrace all alternatives, modifications and variations which fall within the scope of the appended claims. Further, many of the elements that are described are functional entities that may be implemented as discrete or distributed components or in conjunction with other components, in any suitable combination and location.

In the claims, any reference signs placed between parentheses shall not be construed as limiting the claim. The word 'comprising' does not exclude the presence of other features or steps than those listed in a claim. Furthermore, the words 'a' and 'an' shall not be construed as limited to `only one', but instead are used to mean 'at least one', and do not exclude a plurality. The term "and/or" includes any and all combinations of one or more of the associated listed items. The mere fact that certain measures are recited in mutually different claims does not indicate that a combination of these measures cannot be used to an advantage.

## Claims

1. A computer-implemented method for optimization of the topology of a thermal energy transfer channel as a physical object, including the steps of:
obtaining target design criteria of the physical object;
defining, based on the target design criteria of the physical object, a unit cell which is dimensioned such that the thermal energy transfer channel is formed by N1 × N2 identical unit cells;
performing, by means of a processing unit, a topology optimization of the thermal energy transfer channel at a unit cell level, wherein the design of a single unit cell is optimized based on a set of criteria including at least thermal performance, wherein the topology optimization includes iterative local redistribution of material of the single unit cell, and wherein the topology optimization of the single unit cell is performed until a stop criterion is met, the stop criterion being defined as achieving a predetermined threshold of thermal performance or reaching a maximum number of optimization iterations;
outputting optimized design parameters representing material distribution in each unit cell of the thermal energy transfer channel; and
transferring data based on the outputted optimized design parameters to a production equipment to produce an optimized physical objection representing the thermal energy transfer channel with N1 × N2 identical unit cells.

2. The computer-implemented method of claim 1, wherein periodic flow equations are utilized to model fluid flow at each unit cell, the periodic flow equations ensuring similarity in fluid flow around each unit cell of the thermal energy transfer channel, and wherein periodic heat transfer equations are utilized to model heat transfer at each unit cell, the periodic heat transfer equations including both linearly varying and periodically varying components of the temperature field within the thermal energy transfer channel.

3. The computer-implemented method of claim 2, wherein the periodic heat equations account for incremental temperature change in a thermal transfer fluid as it passes through successive unit cells in the thermal energy transfer channel.

4. The computer-implemented method of claim 1, 2 or 3, wherein the unit cells are allowed to include various material types including solid material, fluid, and porous material.

5. The computer-implemented method of claim 4, wherein a relaxation model is employed to handle different material states including solid, fluid, and porous material, wherein the relaxation model is configured to allow for continuous variation in material properties.

6. The computer-implemented method of any one of the preceding claims, wherein a filter operator is used on the material distribution within the unit cell in order to control the size of smallest solid features in the optimized thermal energy transfer channel topology, wherein the filter operator is adjusted to achieve a desired level of detail in solid feature representation within the thermal energy transfer channel.

7. The computer-implemented method of claim 6, wherein the filter operator is designed to enforce manufacturing constraints related to minimum feature size and resolution.

8. The computer-implemented method of claims 6 or 7, wherein a projection operator is applied to a filtered material distribution to achieve a binary material distribution of solid and fluid material, wherein the projection operator is utilized to facilitate the manufacturing process by simplifying the material distribution to discrete states.

9. The computer-implemented method according to any one of the preceding claims, wherein the production equipment comprises an additive manufacturing system capable of fabricating at least parts of the thermal energy transfer channel with N1 × N2 identical unit cells based on the optimized design parameters.

10. The computer-implemented method according to any one of the preceding claims, wherein a plurality of unit cells are arranged in a matrix configuration, each unit cell defining therein an individual thermal transfer element within the thermal energy transfer channel, the thermal transfer element being surrounded by thermal fluid.

11. The computer-implemented method according to any one of the preceding claims, wherein the topology optimization of the thermal energy transfer channel at a unit cell level employs a gradient-based optimization technique that uses adjoint-based optimization for calculating gradients during the iterative process.

12. The computer-implemented method according to any one of the preceding claims, wherein the set of criteria for optimization includes constraints based on operating conditions, namely at least one of a maximum pumping power or a maximum pressure drop requirement.

13. The computer-implemented method according to any one of the preceding claims, wherein the topology optimization process employs laminar flow conditions.

14. The computer-implemented method according to any one of the preceding claims, wherein dimensions of each unit cell are determined based on the desired thermal performance and physical constraints of the thermal energy transfer channel.

15. A system configured to perform optimization of the topology of a thermal energy transfer channel as a physical object, the system comprising:
a data module configured to store target design criteria of the physical object;
a unit cell defining module operatively connected to the data module, configured to define a unit cell based on the target design criteria of the physical object, wherein the unit cell is dimensioned such that the thermal energy transfer channel is formed by N1 × N2 identical unit cells;
a processing unit operatively connected to the unit cell defining module, configured to perform topology optimization of the thermal energy transfer channel at a single unit cell level, wherein the design of the single unit cell is optimized based on a set of criteria including at least heat transfer efficiency, and wherein the topology optimization includes iterative local redistribution of material of the single unit cell, the optimization being performed until a stop criterion is met, the stop criterion being defined as achieving a predetermined threshold of heat transfer efficiency or reaching a maximum number of optimization iterations;
an output module operatively connected to the processing unit, configured to output optimized design parameters representing material distribution in each unit cell of the thermal energy transfer channel; and
a transfer interface operatively connected to the output module, configured to transfer the optimized design parameters to production equipment for producing an optimized physical object representing the thermal energy transfer channel with N1 × N2 identical unit cells.
